# EUROPEAN PATENT APPLICATION

(11) **EP 4 442 983 A1**
(43) Date of publication of application: **09.10.2024**
(21) Application number: 24165100.9
(22) Date of filing: 21.03.2024
(51) Int. Cl.: F02D 11/02, B62K 23/04, F02D 11/10, G05G 5/05, G01D 5/14

(54) **THROTTLE OPERATION DEVICE**

(30) Priority: 23.03.2023 JP 2023046651; 23.03.2023 JP 2023046652; 03.10.2023 JP 2023172376; 03.10.2023 JP 2023172377
(71) Applicant: Asahi Denso Co., Ltd., Shizuoka 434-0046 (JP)
(72) Inventor: Uematsu, Yasuhiko, Hamamatsu City, Shizuoka, 434-0046 (JP)
(74) Representative: Grünecker Patent- und Rechtsanwälte PartG mbB

(57) **Abstract**

A throttle operation device has an interlocking member rotating in conjunction with a rotation operation of an operation unit of a vehicle, a magnet rotating together with the interlocking member, a detection unit detecting a rotation angle of the operation unit by detecting a magnetic change in the magnet, a first biasing unit biasing the operation unit and the interlocking member toward an initial position during a rotation operation of the operation unit in a forward direction, a second biasing unit biasing the operation unit and the interlocking member toward the initial position during a rotation operation of the operation unit in a reverse direction, and an applying unit generating friction during rotation of the interlocking member. The interlocking member is provided with a plurality of the magnets arranged in an arc shape, and the magnets, the applying unit, and the second biasing unit are provided on the same circumference.

## Description

### TECHNICAL FIELD

The present invention relates to a throttle operation device in which a driving source of a vehicle is controlled based on a rotation operation of an operation unit.

### BACKGROUND ART

In recent two-wheel vehicles, a throttle operation device configured to detect a rotation angle of a throttle grip by a throttle opening degree sensor such as a potentiometer and transmit a detected value as an electric signal to an electronic control device or the like mounted on the two-wheel vehicle has been widely used. The electronic control device performs a predetermined calculation based on the detection signal, and based on the calculation result, a driving source (for example, an ignition timing of an engine, and the opening and closing of an intake valve or a throttle valve) of the vehicle is controlled.

As a throttle operation device in the related art, for example, a throttle operation device disclosed in JP2020-122476A is exemplified. In such a throttle operation device in the related art, an arc-shaped magnet is attached to an interlocking member interlocking with a throttle grip, and by detecting magnetic change of the magnet using a magnetic sensor, a rotation angle of the interlocking member and the throttle grip is detected to perform engine control.

Further, the throttle operation device in the related art includes a first biasing unit for biasing the throttle grip and the interlocking member toward the initial position at the time of the rotation operation on the throttle grip in a forward direction, and a second biasing unit for biasing the throttle grip and the interlocking member toward the initial position at the time of the rotation operation on the throttle grip in a reverse direction. The second biasing unit is formed on the interlocking member together with the magnet. In this way, since the magnet and the second biasing unit are formed in the interlocking member, the configuration can be simplified.

Further, a resistance-force applying unit is attached to the interlocking member of the throttle operation device in the related art. By generating friction when the interlocking member rotates and applying a resistance force during the rotation operation on the throttle grip, it is possible to obtain a desired operational feeling, and it is possible to improve operability of the throttle grip. In this way, since the magnet and the resistance-force applying unit are formed in the interlocking member, the configuration can be simplified.

However, in the related art, although the configuration can be simplified by forming the arc-shaped magnet and the second biasing unit in the interlocking member, the arc-shaped magnet having a special shape is required, which may increase manufacturing costs. In recent years, it is required to detect the throttle grip subjected to the rotation operation in the reverse direction over any rotation angle regardless of the size of the magnet. Such a requirement is not limited to a throttle grip that can be rotatably operated while being held by a driver, and is similarly applied to other types of operation unit such as an operation lever that can be operated while a driver holds a grip portion attached to a handlebar of a vehicle.

In addition, in the above-described related art, although the configuration can be simplified by forming the arc-shaped magnet and the resistance-force applying unit in the interlocking member, the arc-shaped magnet having a special shape is required, which may increase manufacturing costs. In this regard, the applicant has considered forming a plurality of magnets side by side in an arc shape instead of the arc-shaped magnet. However, in this case, a separated place between the magnets becomes a dead space, and the applicant has studied to effectively utilize the dead space formed by the separated place. Such a requirement is not limited to a throttle grip that can be rotatably operated while being held by a driver, and is similarly applied to other types of operation unit such as an operation lever that can be operated while a driver holds a holding grip attached to a handlebar of a vehicle.

### SUMMARY OF INVENTION

An object of the present invention is to provide a throttle operation device that enables to simplify the configuration thereof, reduce the manufacturing cost by using a general-purpose magnet, and detect an operation unit subjected to a rotation operation in a reverse direction over any rotation angle regardless of the size of the magnet.

Another object of the present invention is to provide a throttle operation device that enables to simplify the configuration thereof, reduce the manufacturing cost by using a general-purpose magnet, and effectively utilize a dead space in the interlocking member.
(1) A throttle operation device having:
   an interlocking member configured to rotate in conjunction with a rotation operation of an operation unit of a vehicle;
   a magnet attached to the interlocking member and configured to rotate together with the interlocking member;
   a rotation angle detection unit configured to detect a rotation angle of the operation unit by detecting a magnetic change in the magnet rotating together with the interlocking member;
   a first biasing unit configured to bias the operation unit and the interlocking member toward an initial position during a rotation operation of the operation unit in a forward direction;
   a second biasing unit configured to bias the operation unit and the interlocking member toward the initial position during a rotation operation of the operation unit in a reverse direction; and
   a resistance-force applying unit configured to generate friction during rotation of the interlocking member to apply a resistance force during the rotation operation of the operation unit,
   in which a driving source of the vehicle is controlled according to the rotation angle of the operation unit detected by the rotation angle detection unit, and
   the interlocking member is provided with a plurality of the magnets arranged in an arc shape, and the plurality of magnets, the resistance-force applying unit, and the second biasing unit are provided on a same circumference.
(2) The throttle operation device according to claim 1,
   in which the interlocking member is provided with a plurality of first accommodation recessed portions configured to respectively accommodate the magnets and a second accommodation recessed portion configured to accommodate the resistance-force applying unit, the first accommodation recessed portions and the second accommodation recessed portion being arranged in an arc shape on one surface of the interlocking member.
(3) The throttle operation device according to claim 1, further having:
   a case in which the interlocking member is accommodated to be rotated, and having an accommodation portion in which the rotation angle detection unit is disposed; and
   a fixing member fixed to the case while being attached to the interlocking member,
   in which the resistance-force applying unit has a friction material pressed against a surface of the fixing member, and the second biasing unit has a coil spring configured to generate a biasing force by being pressed and compressed by a predetermined portion of the fixing member when the interlocking member rotates as the operation unit rotates in the reverse direction.
(4) The throttle operation device according to claim 3,
   in which the first biasing unit includes a torsion coil spring, and has one end locked to the interlocking member and an other end locked to the fixing member.
(5) The throttle operation device according to claim 1,
   in which the magnet or the resistance-force applying unit is disposed on one side of the interlocking member bisected by a plane perpendicular to a line orthogonal to a rotation shaft of the interlocking member, and the second biasing unit is disposed on an other side of the interlocking member bisected by the plane perpendicular to the line orthogonal to the rotation shaft of the interlocking member.
(6) The throttle operation device according to claim 1,
   in which the operation unit includes a throttle grip configured to be rotated while being held by a driver of the vehicle.
(7) The throttle operation device according to claim 1,
   in which the operation unit includes an operation lever configured to be operated by a driver of the vehicle with the driver's finger while holding a holding grip attached to a handlebar of a vehicle.
(8) A throttle operation device having:
   an interlocking member configured to rotate in conjunction with a rotation operation of an operation unit of a vehicle;
   a magnet attached to the interlocking member and configured to rotate together with the interlocking member;
   a rotation angle detection unit configured to detect a rotation angle of the operation unit by detecting a magnetic change in the magnet rotating together with the interlocking member; and
   a resistance-force applying unit configured to generate friction during rotation of the interlocking member to apply a resistance force during the rotation operation of the operation unit,
   in which a driving source of the vehicle is controlled according to the rotation angle of the operation unit detected by the rotation angle detection unit, and
   a plurality of the magnets are attached to the interlocking member at a predetermined distance separated from each other, and the resistance-force applying unit is provided at a separated place between the magnets being adjacent to each other.
(9) The throttle operation device according to claim 8,
   in which the magnet and the resistance-force applying unit are provided on a same circumference in the interlocking member.
(10) The throttle operation device according to claim 8,
   in which the interlocking member is provided with a plurality of first accommodation recessed portions configured to accommodate the magnets and a second accommodation recessed portion configured to accommodate the resistance-force applying unit, the first accommodation recessed portions and the second accommodation recessed portion being arranged in an arc shape on one surface of the interlocking member.
(11) The throttle operation device according to claim 8, further having:
   a case, in which the interlocking member is accommodated to be rotated, having an accommodation portion in which the rotation angle detection unit is disposed; and
   a fixing member fixed to the case while being attached to the interlocking member,
   in which the resistance-force applying unit has a friction material pressed against a surface of the fixing member.
(12) The throttle operation device according to claim 11, further having:
   a torsion coil spring configured to bias the operation unit and the interlocking member toward an initial position during the rotation operation of the operation unit,
   in which one end of the torsion coil spring is locked to the interlocking member, and an other end of the torsion coil spring is locked to the fixing member
(13) The throttle operation device according to claim 8,
   in which the operation unit includes a throttle grip configured to be rotated while being held by a driver of the vehicle.
(14) The throttle operation device according to claim 8,
   in which the operation unit includes an operation lever configured to be operated by a driver the vehicle with the driver's finger while holding a holding grip attached to a handlebar of a vehicle.

According to the above-described (1), the interlocking member is provided with the plurality of magnets arranged in an arc shape, and the plurality of magnets, the resistance-force applying unit, and the second biasing unit are provided on the same circumference. Therefore, the configuration of the throttle operation device can be simplified, manufacturing costs can be reduced by using a general-purpose magnet, and the rotation operation angle of the operation unit in the reverse direction can be freely set regardless of the size of the magnet.

According to the above-described (2), the plurality of first accommodation recessed portions for accommodating the magnets and the second accommodation recessed portions for accommodating the resistance-force applying units are formed side by side in an arc shape on one surface of the interlocking member. Therefore, the plurality of magnets and the resistance-force applying units can be accurately positioned and easily attached to the interlocking member.

According to the above-described (3), the resistance-force applying unit has the friction material pressed against the surface of the fixing member, and the second biasing unit has the coil spring which generates a biasing force by being pressed and compressed by a predetermined portion of the fixing member when the interlocking member rotates as the operation unit rotates in the reverse direction. Therefore, the application of the resistance force by the resistance-force applying unit and the biasing by the second biasing unit can be more reliably performed on the fixing member.

According to the above-described (4), the first biasing unit includes a torsion coil spring, and the one end of the torsion coil spring is locked to the interlocking member and the other end of the torsion coil spring is locked to the fixing member. Therefore, in addition to the resistance force applied by the resistance-force applying unit and the biasing by the second biasing unit, the biasing by the first biasing unit can be more reliably performed on the fixing member.

According to the above-described (5), the magnets or the resistance-force applying units are disposed on one side of the interlocking member bisected by a plane perpendicular to a line orthogonal to a rotation shaft, and the second biasing unit is disposed on the other side of the interlocking member bisected by the plane perpendicular to the line orthogonal to the rotation shaft. Therefore, weight balance of the interlocking member in a rotation direction can be favorably set, and the interlocking member can be rotated stably.

According to the above-described (6), the operation unit includes the throttle grip rotatable while being held by the driver, and thus can be applied to a vehicle including the throttle grip.

According to the above-described (7), the operation unit includes the operation lever operable by the driver with his or her finger while holding the holding grip attached to the handlebar of the vehicle, and therefore can be applied to a vehicle equipped with the operation lever.

According to the above-described (8), the plurality of magnets are attached to the interlocking member at a predetermined distance separated from each other, and the resistance-force applying unit is provided at a separated place between the adjacent magnets. Therefore, the configuration of the throttle operation device can be simplified, manufacturing costs can be reduced by using a general-purpose magnet, and a dead space in the interlocking member can be effectively utilized.

According to the above-described (9), the magnets and the resistance-force applying units are provided on the same circumference in the interlocking member. Therefore, the dimension of the interlocking member in the radial direction can be reduced and the size can be reduced.

According to the above-described (10), the plurality of first accommodation recessed portions for accommodating the magnets and the second accommodation recessed portions for accommodating the resistance-force applying units are formed side by side in an arc shape on one surface of the interlocking member. Therefore, the plurality of magnets and the resistance-force applying units can be accurately positioned and easily attached to the interlocking member.

According to the above-described (11), the case, in which the interlocking member is rotatably accommodated, has the accommodation portion in which the rotation angle detection unit is disposed, and the fixing member fixed to the case while being attached to the interlocking member are provided. The resistance-force applying unit has the friction material pressed against the surface of the fixing member. Therefore, the resistance force by the resistance-force applying unit can be reliably applied to the fixing member.

According to the above-described (12), the torsion coil spring for biasing the operation unit and the interlocking member toward the initial position at the time of the rotation operation of the operation unit is provided, and the one end of the torsion coil spring is locked to the interlocking member and the other end is locked to the fixing member. Therefore, in addition to the resistance force applied by the resistance-force applying unit, the fixing member can be more reliably biased by the first biasing unit.

According to the above-described (13), the operation unit includes the throttle grip rotatable while being held by the driver, and thus can be applied to a vehicle including the throttle grip.

According to the above-described (14), the operation unit includes the operation lever operable by the driver with his or her finger while holding the holding grip attached to the handlebar of the vehicle, and therefore can be applied to a vehicle equipped with the operation lever.

### BRIEF DESCRIPTION OF DRAWINGS

FIG. 1 is a front view and a left side view showing an appearance of a throttle operation device according to a first embodiment of the present invention.
FIG. 2 is a cross-sectional view taken along line II-II in FIG. 1.
FIG. 3 is a cross-sectional view taken along line III-III in FIG. 2.
FIG. 4 is a perspective view showing a case of the throttle operation device.
FIG. 5 is a three-sided view showing a unit including an interlocking member and the like of the throttle operation device.
FIG. 6 is a perspective view showing the unit.
FIG. 7 is an exploded perspective view showing the unit.
FIG. 8 is an exploded perspective view showing the unit.
FIG. 9 is a three-sided view showing the interlocking member of the throttle operation device.
FIG. 10 is a schematic view showing a position relationship between a magnet of the interlocking member and a magnetic sensor in the throttle operation device.
FIG. 11 is a schematic view showing the position relationship between the magnet of the interlocking member and the magnetic sensor when the interlocking member is rotated in a forward direction in the throttle operation device.
FIG. 12 is a schematic view showing the position relationship between the magnet of the interlocking member and the magnetic sensor when the interlocking member is rotated in a reverse direction in the throttle operation device.
FIG. 13 is a perspective view showing a second biasing unit of the throttle operation device.
FIG. 14 is a front view and a side view showing an appearance of a throttle operation device according to a second embodiment of the present invention.
FIG. 15 is a right side view showing the external appearance of the throttle operation device.
FIG. 16 is a three-sided view showing a unit including an interlocking member, an operation lever and the like of the throttle operation device.
FIG. 17 is an exploded perspective view showing the unit.
FIG. 18 is an exploded perspective view showing the unit.
FIG. 19 is a perspective view showing the unit.
FIG. 20 is a schematic view showing a position relationship between a magnet of the interlocking member and a magnetic sensor in the throttle operation device.
FIG. 21 is a schematic view showing a state in which the operation lever is operated in the throttle operation device.
FIG. 22 is a front view and a side view showing an appearance of a throttle operation device according to a third embodiment of the present invention.
FIG. 23 is a right side view showing the external appearance of the throttle operation device.
FIG. 24 is a three-sided view showing a unit including an interlocking member, an operation lever and the like of the throttle operation device.
FIG. 25 is an exploded perspective view showing the unit.
FIG. 26 is an exploded perspective view showing the unit.
FIG. 27 is a perspective view showing the unit.
FIG. 28 is a schematic view showing a position relationship between a magnet of the interlocking member and a magnetic sensor in the throttle operation device.
FIG. 29 is a schematic view showing a state in which the operation lever is operated in the throttle operation device.

### DESCRIPTION OF EMBODIMENTS

Hereinafter, embodiments of the present invention will be specifically described with reference to the drawings.

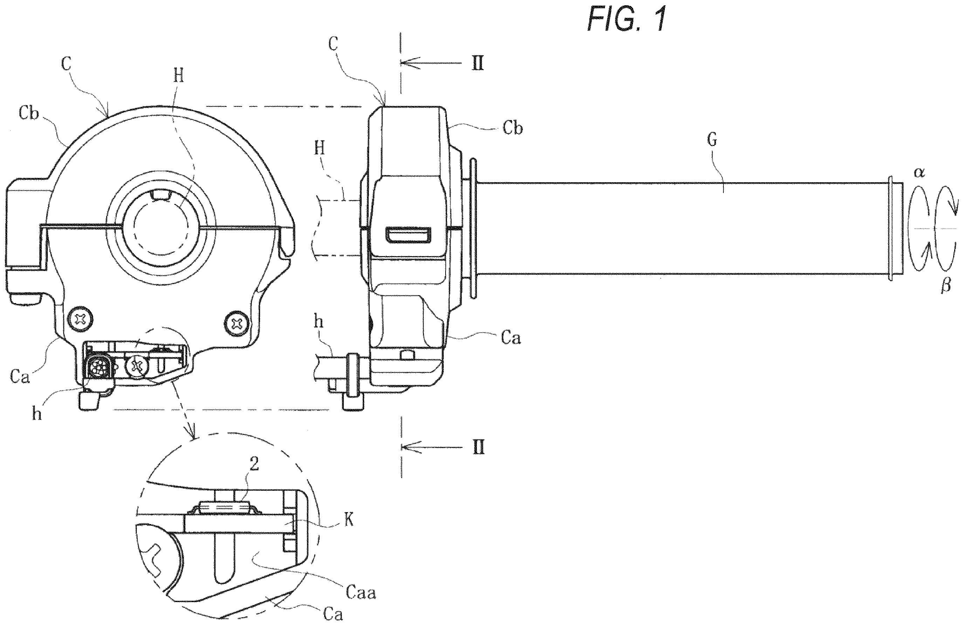

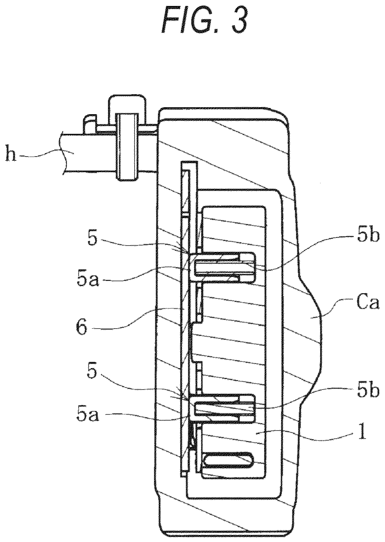

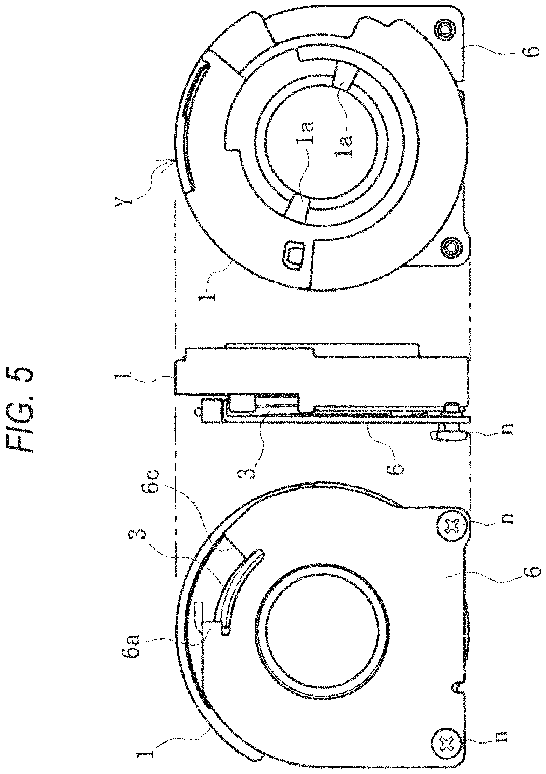

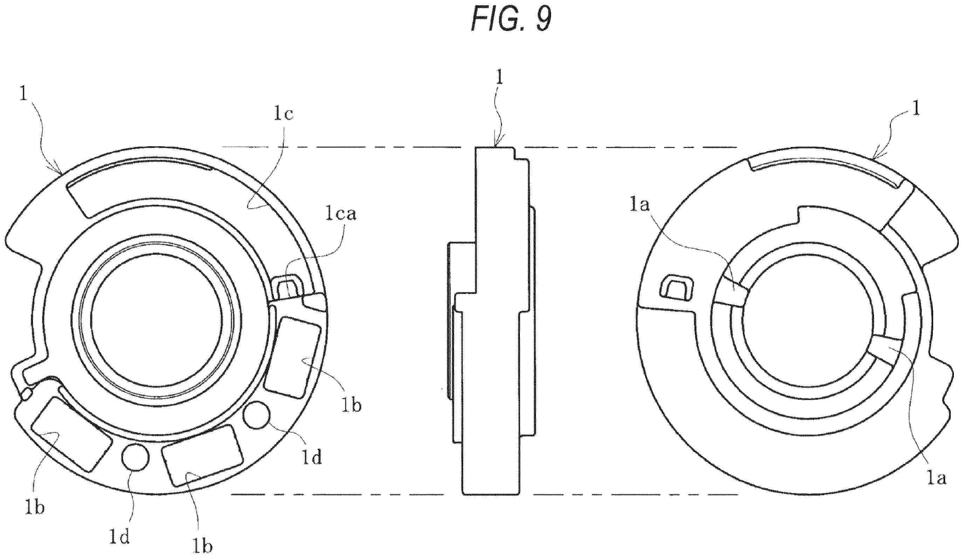

As shown in FIG. 1, a throttle operation device according to a first embodiment detects a rotation angle of a throttle grip G (operation unit) attached to a handlebar H of a two-wheel vehicle, and transmits a detection signal to an electronic control device such as an ECU mounted on the two-wheel vehicle. Specifically, as shown in FIGs. 1 to 9, the throttle operation device according to the present embodiment includes an interlocking member 1, a magnetic sensor 2 (rotation angle detection unit), a first biasing unit 3, a second biasing unit 4, a resistance-force applying unit 5, a fixing member 6, and a case C. The throttle grip G according to the present embodiment can be rotated while being held by a driver.

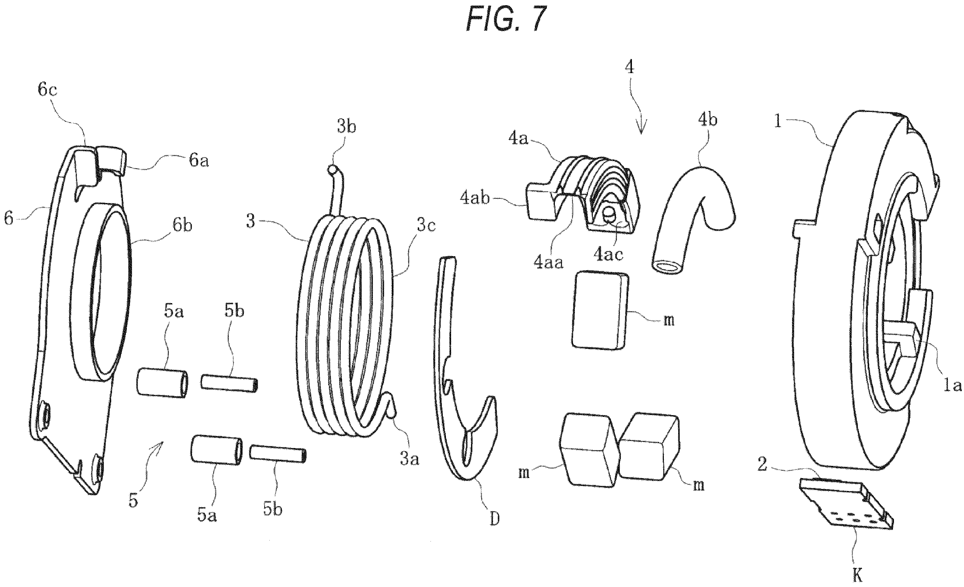

The interlocking member 1 can rotate in conjunction with a rotation operation of the throttle grip G of the vehicle. As shown in FIGs. 7 to 9, the interlocking member 1 is made of a substantially cylindrical resin molded product, and includes a fitted portion 1a into which a base end portion of the throttle grip G can be fitted, a plurality of (three in the present embodiment) first accommodation recessed portions 1b that each accommodate a magnet m, a plurality of (two in the present embodiment) second accommodation recessed portions 1d that each accommodate the resistance-force applying unit 5, and a third accommodation recessed portion 1c that accommodates the second biasing unit 4.

Further, in the interlocking member 1 according to the present embodiment, the plurality of first accommodation recessed portions 1b for accommodating the magnets m and the plurality of second accommodation recessed portions 1d for accommodating the resistance-force applying units 5 are formed side by side in an arc shape on one surface, and the third accommodation recessed portion 1c is formed at a position on the same circumference with respect to the first accommodation recessed portions 1b and the second accommodation recessed portions 1d. The fitted portion 1a is formed on the other surface of the interlocking member 1.

The interlocking member 1 is attached by fitting the magnets m into the first accommodation recessed portions 1b, the resistance-force applying units 5 into the second accommodation recessed portions 1d, and the second biasing unit 4 into the third accommodation recessed portion 1c. In this way, in the interlocking member 1 according to the present embodiment, the plurality of magnets m are formed side by side in an arc shape, and the plurality of magnets m, the resistance-force applying units 5, and the second biasing unit 4 are formed on the same circumference.

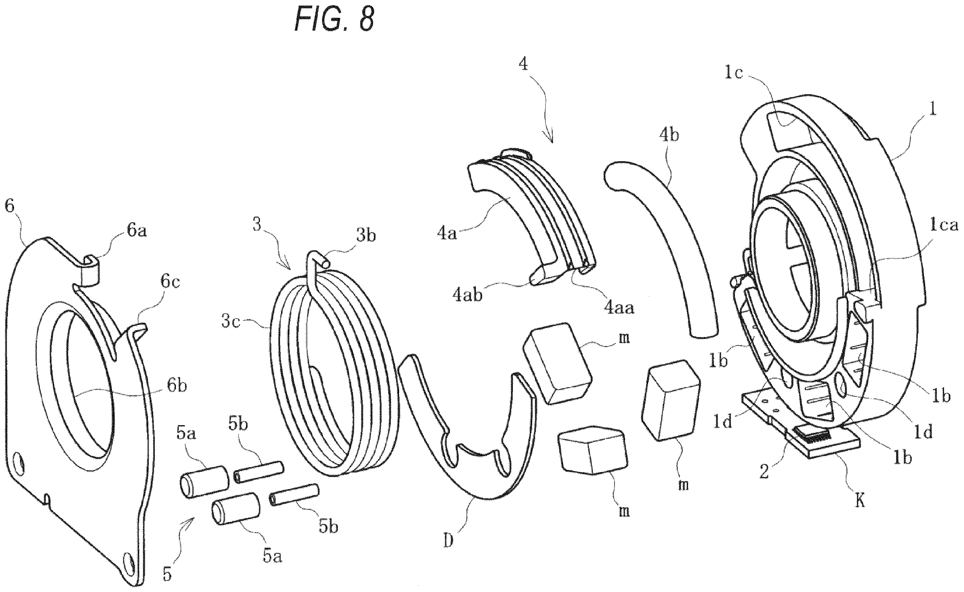

More specifically, each of the plurality of magnets m is formed in a block shape (a cubic shape or a rectangular parallelepiped shape having a rectangular cross section), and by being attached to the first accommodation recessed portions 1b, the plurality of magnets m are formed side by side in an arc shape while being separated from each other by a predetermined distance, and the resistance-force applying units 5 are formed in separated places between the adjacent magnets m, respectively. The first accommodation recessed portions 1b formed side by side in an arc shape are covered with a cover member D (see FIGs. 7 and 8) to prevent the magnets m fitted into the first accommodation recessed portions 1b from falling off.

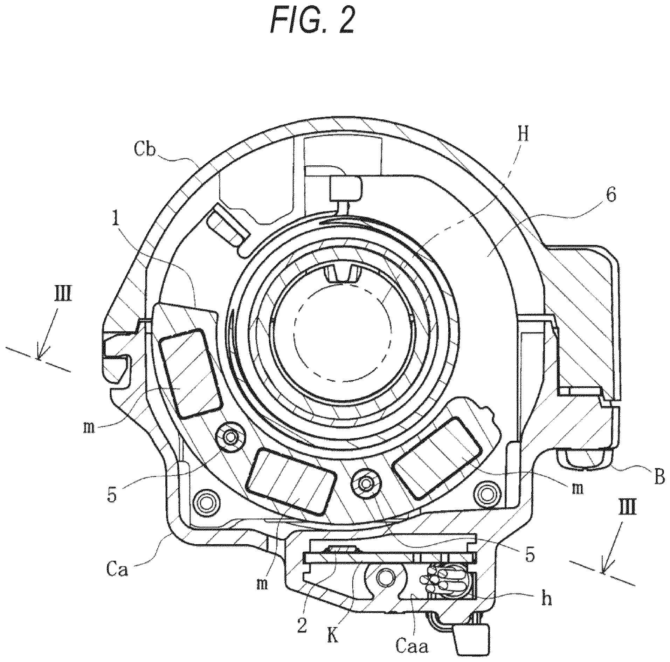

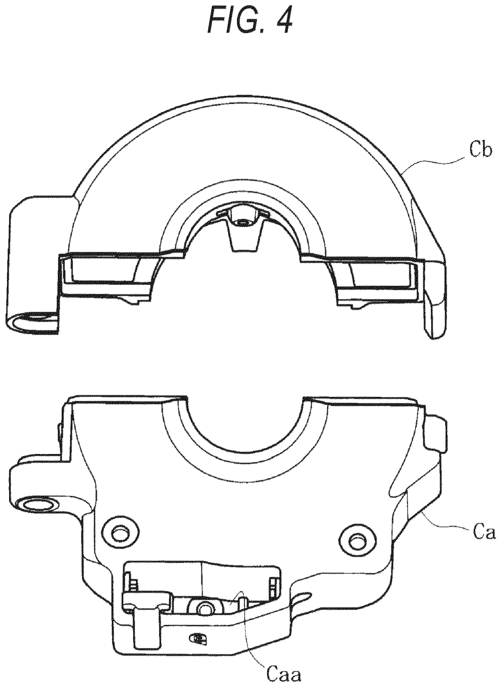

The case C is fixed to a tip end side (base end side of the throttle grip G) of the handlebar H (see FIGs. 1 and 2) of a two-wheel vehicle (vehicle), and is formed by assembling a lower case Ca and an upper case Cb (see FIG. 4) with a bolt B (see FIG. 2). An accommodation recessed portion is formed inside each of the lower case Ca and the upper case Cb, and by assembling the lower case Ca and the upper case Cb in a matching manner, an accommodation space is formed inside.

As shown in FIGs. 1, 2, and 4, the lower case Ca is formed with an accommodation portion Caa that accommodates a substrate K to which the magnetic sensor 2 is attached. As shown in FIGs. 1 and 2, the magnetic sensor 2 (rotation angle detection unit) includes a sensor disposed in the accommodation portion Caa of the lower case Ca, and detects changes in magnetism generated from the magnets m, so that the rotation angle of the interlocking member 1 can be detected, and the rotation angle of the throttle grip G can be detected. A reference sign h in the drawing indicates a wiring extending from the magnetic sensor 2, and a detection signal is transmitted to the vehicle through the wiring h.

Specifically, the magnetic sensor 2 can obtain an output voltage corresponding to a change in magnetic field (change in magnetic flux density) of the magnets m caused by the rotation of the interlocking member 1, and includes, for example, a Hall element (specifically, a linear Hall IC capable of obtaining an output voltage proportional to the magnetic field (magnetic flux density) of the magnets m) which is a magnetic sensor using the Hall effect. When the plurality of magnets m rotate as the throttle grip G is subjected to a rotation operation and the interlocking member 1 rotates, magnetism exerted on the magnetic sensor 2 changes.

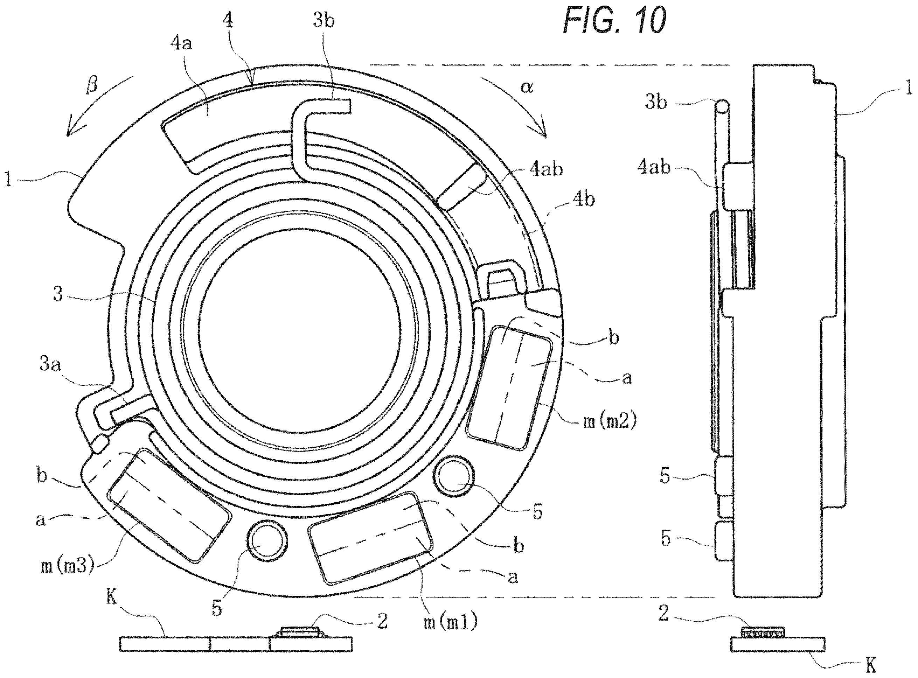

As shown in FIG. 10, three magnets m (a magnet m1 at a central position and magnets m2 and m3 at both end positions) according to the present embodiment are arranged in a circumferential direction of the interlocking member 1, and poles (N-pole or S-pole) of outside portions a of the magnets (m2 and m3) at both end positions and the pole (N-pole or S-pole) of an outside portion a of the magnet m1 at the central position are set to be different from each other. For example, the magnet m1 at the central position may be disposed such that the outside portion a is the N-pole and an inside portion b is the S-pole, and the two adjacent magnets m2 and m3 at both end positions may be disposed such that the outside portion a is the S-pole and an inside portion b is the N-pole. Alternatively, the magnet m1 at the central position may be disposed such that the outside portion a is the S-pole and the inside portion b is the N-pole, and the two adjacent magnets m2 and m3 at both end positions may be disposed such that the outside portion a is the N-pole and the inside portion b is the S-pole.

Thus, since the magnetism changes according to the rotation angle of the interlocking member 1, the throttle operation device according to the present embodiment can obtain an output voltage corresponding to the rotation angle, and can detect the rotation angle of the interlocking member 1 (that is, the rotation angle of the throttle grip G) based on the output voltage. The rotation angle of the throttle grip G detected in this way is transmitted as an electric signal to an ECU (engine control unit) mounted on the two-wheel vehicle, and the engine (driving source) of the vehicle can be controlled according to the transmitted rotation angle of the throttle grip G.

Further, the magnetic sensor 2 according to the present embodiment can detect a rotation operation in a forward direction α as well as a rotation operation in a reverse direction β of the throttle grip G. Accordingly, the throttle operation device according to the present embodiment can control the engine according to the rotation angle of the throttle grip G by a driver performing a rotation operation on the throttle grip G in the forward direction α from an initial position while holding the throttle grip G, allowing the vehicle to travel at any speed, and can activate or deactivate an electric component (for example, a cancel function of cruise control) mounted on the vehicle by a rotation operation on the throttle grip G in the reverse direction β from the initial position.

The first biasing unit 3 is configured from a torsion coil spring that biases the throttle grip G and the interlocking member 1 toward the initial position at the time of the rotation operation on the throttle grip G in the forward direction α. As shown in FIGs. 7 and 8, the first biasing unit 3 includes one end 3a locked to the interlocking member 1, the other end 3b locked to a locking portion 6a of the fixing member 6, and a coil portion 3c located between the one end 3a and the other end 3b.

As described above, the first biasing unit 3 according to the present embodiment is configured from a torsion coil spring, and has the one end 3a attached to the interlocking member 1 and the other end 3b assembled to the fixing member. When the throttle grip G is rotated, since the interlocking member 1 is rotated against a biasing force of the first biasing unit 3, the biasing force is transmitted to the throttle grip G, and a force acts to return the throttle grip G and the interlocking member 1 to the initial positions.

The second biasing unit 4 biases the throttle grip G and the interlocking member 1 toward the initial position at the time of the rotation operation on the throttle grip G in the reverse direction β, and is attached to the third accommodation recessed portion 1c of the interlocking member 1, as described above. The second biasing unit 4 includes a movable portion 4a formed in an arc shape as a whole and a coil spring 4b accommodated in the movable portion 4a.

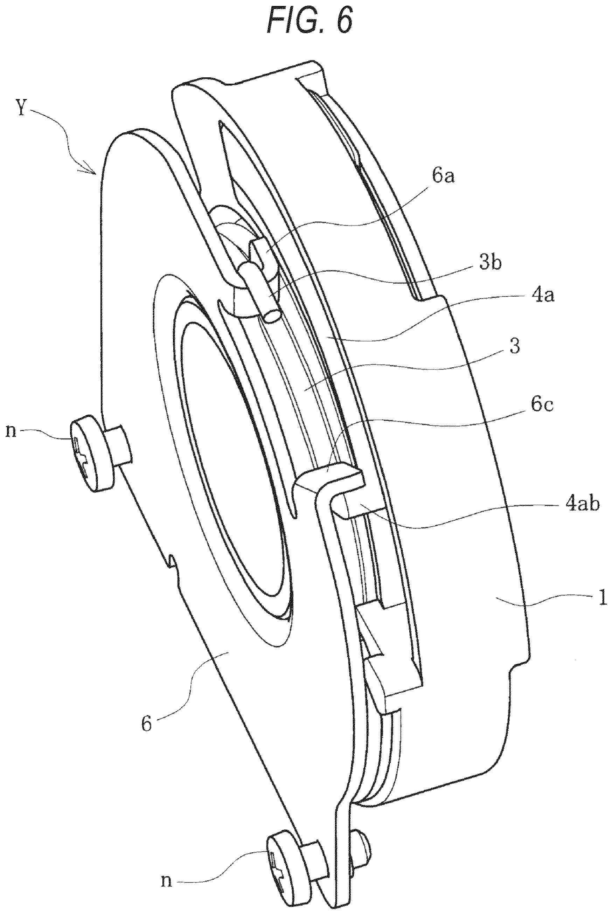

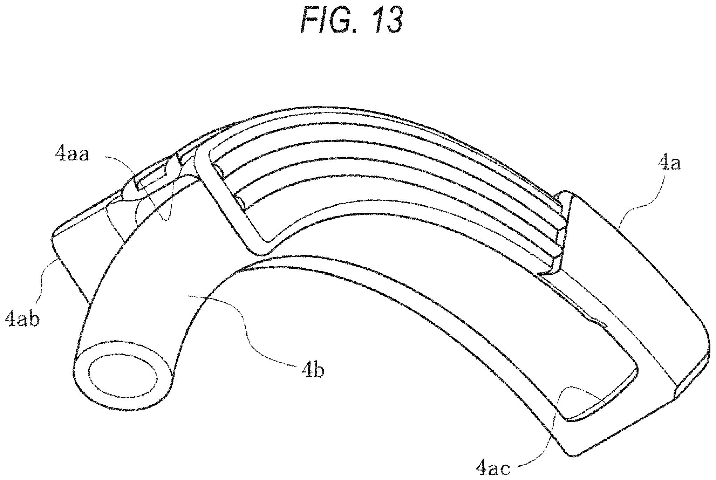

The movable portion 4a is formed of a component having an arc shape extending in the circumferential direction of the interlocking member 1. As shown in FIGs. 7, 8, and 13, the movable portion 4a is integrally formed with an accommodation groove portion 4aa for holding the coil spring 4b, a spring receiving portion 4ac formed of a wall surface of the accommodation groove portion 4aa and configured to receive one end of the coil spring 4b, and a protruding portion 4ab to come into contact with a contact portion 6c of the fixing member 6 (see FIG. 6). Further, the coil spring 4b is held in the accommodation groove portion 4aa of the movable portion 4a, and is assembled with one end in contact with the spring receiving portion 4ac of the movable portion 4a and the other end in contact with a wall surface 1ca of the third accommodation recessed portion 1c of the interlocking member 1.

Accordingly, when the throttle grip G is subjected to the rotation operation in the reverse direction β, the interlocking member 1 rotates in conjunction with the throttle grip G, while the protruding portion 4ab of the movable portion 4a comes into contact with the contact portion 6c to restrict the rotation, so that the coil spring 4b is compressed. The biasing force generated by the compression is applied to the throttle grip G, so that a force is applied to return the throttle grip G and the interlocking member 1 to the initial positions. When the throttle grip G is subjected to the rotation operation in the forward direction α, the protruding portion 4ab of the movable portion 4a is separated from the contact portion 6c, so that the coil spring 4b is not compressed and no biasing force is applied.

The resistance-force applying unit 5 generates friction during rotation of the interlocking member 1 to apply a resistance force during rotation operation on the throttle grip G. As shown in FIGs. 7 and 8, the resistance-force applying unit 5 includes a friction material 5a formed in a cylindrical shape and a biasing spring 5b that biases the friction material 5a to press the friction material 5a against a surface of the fixing member 6. Further, the resistance-force applying unit 5 according to the present embodiment is fitted into and assembled to the second accommodation recessed portion 1d of the interlocking member 1, and is attached to the separated place between the adjacent magnets m. The magnets m and the resistance-force applying units 5 are formed on the same circumference in the interlocking member 1.

The fixing member 6 rotatably holds the interlocking member 1 while positioning the interlocking member 1. As shown in FIGs. 6 to 8, the fixing member 6 is made of a metal plate-like member formed with a locking portion 6a for locking the other end 3b of the first biasing unit 3, a guide portion 6b for holding the interlocking member 1 while positioning the interlocking member 1, and the contact portion 6c to come into contact with or separated from the protruding portion 4ab of the second biasing unit 4. A screw hole through which a screw n (see FIG. 6) can be inserted is formed at a predetermined position of the fixing member 6, and the fixing member 6 can be fixed at a predetermined position in the lower case Ca by screwing.

The locking portion 6a is formed by bending a part of the fixing member 6, and is configured to reliably lock the other end 3b of the first biasing unit 3. The guide portion 6b is formed with a portion in which a part of the fixing member 6 is formed in an annular shape to protrude by burring or the like, and is inserted into a center hole of the interlocking member 1 is rotatably fitted and positioned (particularly, positioned in a radial direction).

As described above, the contact portion 6c is formed of a portion that comes into contact with the protruding portion 4ab of the second biasing unit 4 and holds the protruding portion 4ab in the circumferential direction. When the throttle grip G is subjected to the rotation operation in the reverse direction β and the interlocking member 1 rotates in the same direction, the contact portion 6c locks the movable portion 4a of the second biasing unit 4 and restricts rotation in the same direction, so that the interlocking member 1 and the movable portion 4a are moved relative to each other to generate a biasing force of the coil spring 4b.

In this way, by holding the interlocking member 1, the first biasing unit 3, and the like with respect to the fixing member 6, a unit Y that can be handled as an integrated component is constructed. That is, the fixing member 6 can hold various components constituting the unit Y, and can generate a resistance force by the resistance-force applying unit 5 when the throttle grip G is subjected to the rotation operation. When the throttle grip G is subjected to the rotation operation in the forward direction α, a biasing force is generated by the first biasing unit 3, and when the throttle grip G is subjected to the rotation operation in the reverse direction β, a biasing force is generated by the second biasing unit 4. By fixing the fixing member 6 to the unit Y configured in this manner within the case C (lower case Ca) with screws n, the unit Y can be assembled into the case C as an integrated component.

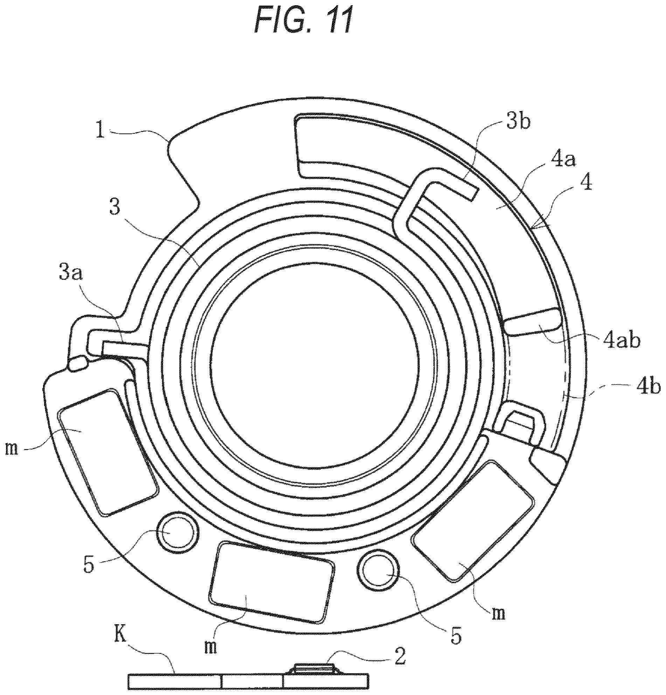

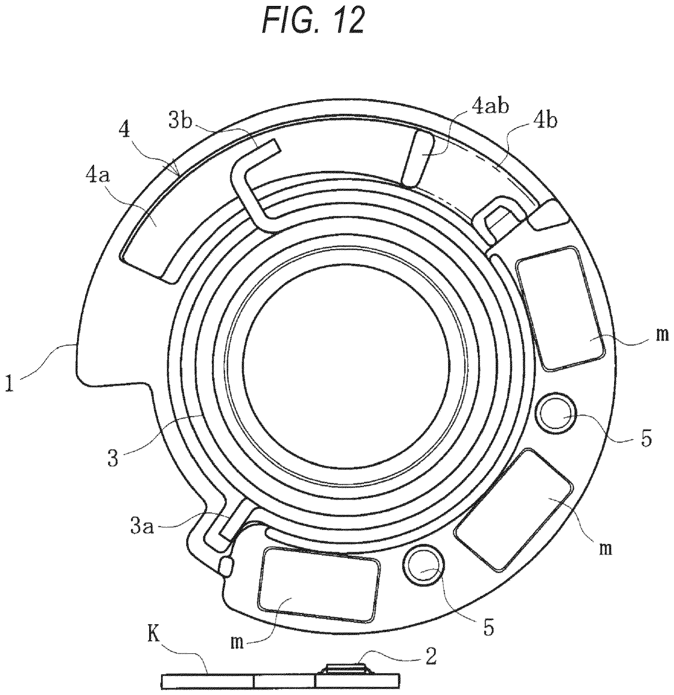

Here, in the throttle operation device according to the present embodiment, as shown in FIG. 10, the substrate K and the magnetic sensor 2 are arranged in the vicinity of the magnets m arranged in an arc shape. That is, as shown in FIG. 10, the magnetic sensor 2 and the substrate K are attached to a position close to the central magnet m1 among the three magnets m and at a side position of the interlocking member 1. When the throttle grip G is subjected to the rotation operation in the forward direction α and the interlocking member 1 rotates in the forward direction α, as shown in FIG. 11, the magnetic sensor 2 approaches the magnet m2 on the right side in the figure. When the throttle grip G is subjected to the rotation operation in the reverse direction β and the interlocking member 1 rotates in the reverse direction β, as shown in FIG. 12, the magnetic sensor 2 approaches the magnet m3 on the left side in the figure.

According to the present embodiment, the plurality of magnets m are formed side by side in an arc shape, and the plurality of magnets m, the resistance-force applying units 5, and the second biasing unit 4 are formed on the same circumference, so that the configuration of the interlocking member 1 can be simplified. In the present embodiment, a general-purpose magnet m (block-shaped magnet) may be used to reduce the manufacturing cost, and the throttle grip G subjected to the rotation operation in the reverse direction β can be detected over any rotation angle regardless of the size of the magnet.

That is, in the present embodiment, by freely setting the separation dimension of the magnets m formed side by side on an arc and the individual arrangement positions, the range that can be detected by the magnetic sensor 2 can be freely set. For example, the rotation angle that the magnetic sensor 2 can detect when the throttle grip G is subjected to the rotation operation in the forward direction α and the rotation angle that the magnetic sensor 2 can detect when the throttle grip G is subjected to the rotation operation in the reverse direction β can be freely set.

Further, in the interlocking member 1 according to the present embodiment, the plurality of first accommodation recessed portions 1b for accommodating the magnets m and the second accommodation recessed portions 1d for accommodating the resistance-force applying units 5 are formed side by side in an arc shape on one surface. Therefore, the plurality of magnets m and the resistance-force applying units 5 can be accurately positioned and easily attached to the interlocking member 1.

Further, the resistance-force applying unit 5 according to the present embodiment has the friction material 5a pressed against the surface of the fixing member 6, and the second biasing unit 4 has the coil spring 4b which generates a biasing force by being pressed and compressed by a predetermined portion (the contact portion 6c) of the fixing member 6 when the interlocking member 1 rotates as the throttle grip G rotates in the reverse direction β. Accordingly, in the present embodiment, it is possible to cause the fixing member 6 to more reliably perform the application of the resistance force by the resistance-force applying unit 5 and the biasing by the second biasing unit 4.

Further, the present embodiment includes the case C that rotatably accommodates the interlocking member 1 and has the accommodation portion Caa in which the magnetic sensor 2 is disposed, and the fixing member 6 that is attached to the interlocking member 1 and fixed to the case C. In addition, the first biasing unit 3 according to the present embodiment is configured from a torsion coil spring, and the one end 3a is locked to the interlocking member 1 and the other end 3b is locked to the fixing member 6. Therefore, in addition to the resistance force applied by the resistance-force applying unit 5 and the biasing by the second biasing unit 4, the fixing member 6 can be more reliably biased by the first biasing unit 3.

Further, according to the present embodiment, the plurality of magnets m are attached to the interlocking member 1 at a predetermined distance separated from each other, and the resistance-force applying unit 5 is provided at the separated place between the adjacent magnets m. Therefore, the configuration can be simplified. In the present embodiment, a general-purpose magnet m (block-shaped magnet) can be used to reduce the manufacturing cost, and the dead space in the interlocking member 1 can be effectively utilized.

In the present embodiment, by freely setting the separation dimension of the magnets m formed side by side on an arc and the individual arrangement positions, the range that can be detected by the magnetic sensor 2 can be freely set. For example, the rotation angle that the magnetic sensor 2 can detect when the throttle grip G is subjected to the rotation operation in the forward direction α and the rotation angle that the magnetic sensor 2 can detect when the throttle grip G is subjected to the rotation operation in the reverse direction β can be freely set.

Further, the magnets m and the resistance-force applying units 5 are formed on the same circumference in the interlocking member 1. Therefore, the dimension of the interlocking member 1 in the radial direction can be reduced and the size can be reduced. Further, in the interlocking member 1 according to the present embodiment, the plurality of first accommodation recessed portions 1b for respectively accommodating the magnets m and the second accommodation recessed portions 1d for accommodating the resistance-force applying units 5 are formed side by side in an arc shape on one surface. Therefore, the plurality of magnets m and the resistance-force applying units 5 can be accurately positioned and easily attached to the interlocking member 1.

Further, the present embodiment includes the case C that rotatably accommodates the interlocking member 1 and has the accommodation portion Caa in which the magnetic sensor 2 is disposed, and the fixing member 6 that is attached to the interlocking member 1 and fixed to the case C. The resistance-force applying unit 5 has the friction material 5a pressed against the surface of the fixing member 6. Therefore, the resistance force by the resistance-force applying unit 5 can be reliably applied to the fixing member 6.

In addition, the present embodiment includes the torsion coil spring as the first biasing unit 3 for biasing the throttle grip G and the interlocking member 1 toward the initial position at the time of the rotation operation of the throttle grip G, and the one end 3a of the torsion coil spring is locked to the interlocking member 1 and the other end 3b is locked to the fixing member 6. Therefore, in addition to the resistance force applied by the resistance-force applying unit 5, the fixing member 6 can be more reliably biased by the first biasing unit 3 (torsion coil spring).

The resistance-force applying unit 5 according to the present embodiment includes the friction material 5a pressed against the surface of the fixing member 6. Further, the second biasing unit 4 according to the present embodiment includes the coil spring 4b which generates a biasing force by being pressed and compressed by a predetermined portion (the contact portion 6c) of the fixing member 6 when the interlocking member 1 rotates as the throttle grip G rotates in the reverse direction β. Accordingly, in the present embodiment, the application of the resistance force by the resistance-force applying unit 5 and the biasing by the second biasing unit 4 can be more reliably performed on the fixing member 6.

Further, the present embodiment includes the case C that rotatably accommodates the interlocking member 1 and has the accommodation portion Caa in which the magnetic sensor 2 is disposed, and the fixing member 6 that is attached to the interlocking member 1 and fixed to the case C. In addition, the first biasing unit 3 according to the present embodiment is configured from a torsion coil spring, and the one end 3a is locked to the interlocking member 1 and the other end 3b is locked to the fixing member 6. Therefore, in addition to the resistance force applied by the resistance-force applying unit 5 and the biasing by the second biasing unit 4, the biasing by the first biasing unit 3 can be more reliably performed on the fixing member 6.

In addition, as shown in FIG. 10, the magnets m or the resistance-force applying units 5 according to the present embodiment are disposed on one side (lower side in FIG. 10) of the interlocking member 1 bisected by a plane perpendicular to a line orthogonal to a rotation shaft, and the second biasing unit 4 is disposed on the other side (upper side in FIG. 10) of the interlocking member 1 bisected by the plane perpendicular to the line orthogonal to the rotation shaft. Therefore, weight balance of the interlocking member 1 in a rotation direction can be favorably set, and the interlocking member 1 can be rotated stably. Further, the operation unit is constituted by the throttle grip G that can be rotated while being held by the driver, and thus can be applied to a vehicle including the throttle grip G.

Next, a throttle operation device according to a second embodiment of the present invention will be described.

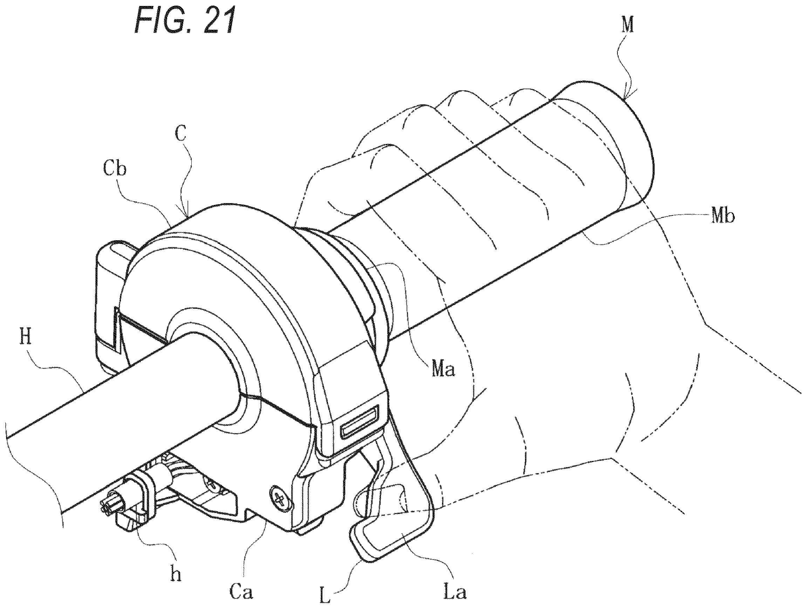

As shown in FIG. 21, the throttle operation device according to the second embodiment detects a rotation angle of an operation lever L (operation unit) that can be operated with a finger (thumb) while holding a holding grip M attached to the handlebar H of the two-wheel vehicle, and transmits a detection signal to an electronic control device such as an ECU mounted on the two-wheel vehicle.

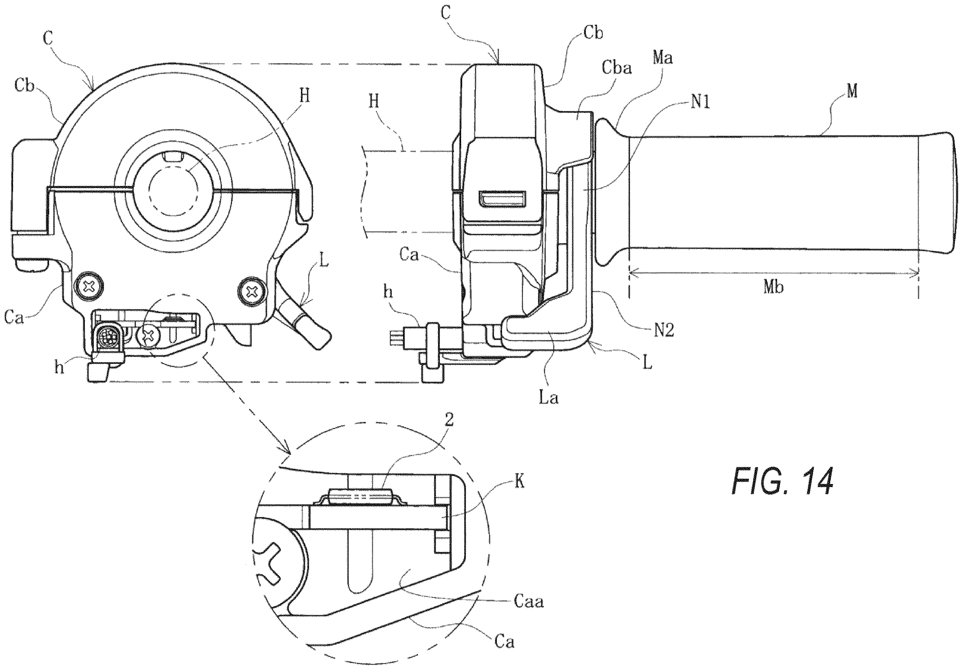

Specifically, as shown in FIGs. 14 to 20, the throttle operation device according to the present embodiment includes the interlocking member 1, the magnetic sensor 2 (rotation angle detection unit), the first biasing unit 3, the second biasing unit 4, the resistance-force applying unit 5, the fixing member 6, the case C, the operation lever L, and the holding grip M. The same components as those in the first embodiment are denoted by the same reference numerals, and detailed description thereof is omitted.

The holding grip M includes a handle grip attached to a tip end portion of the handlebar H of the vehicle, and has a holding region Mb that can be held by a driver, and a flange Ma that protrudes in the circumferential direction and has a diameter larger than the holding region Mb is integrally formed at a base end of the holding grip M. The holding grip M according to the present embodiment is intended to be held exclusively by a driver, and is fixed to the tip end portion of the handlebar H by adhesion or the like so as not to rotate (not suitable for rotation operation).

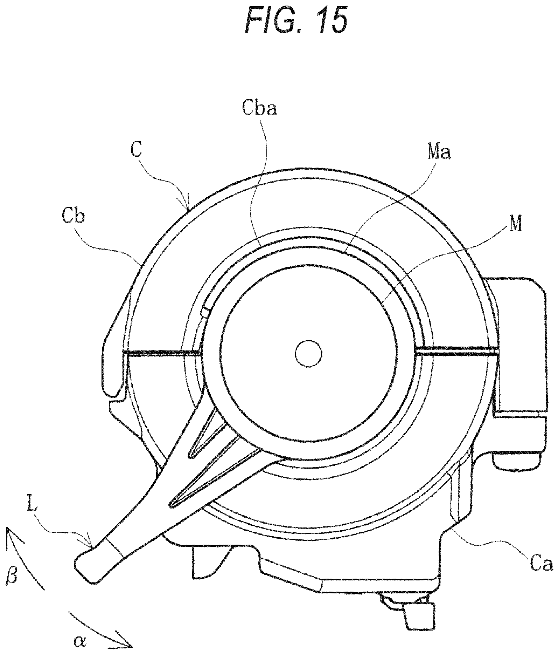

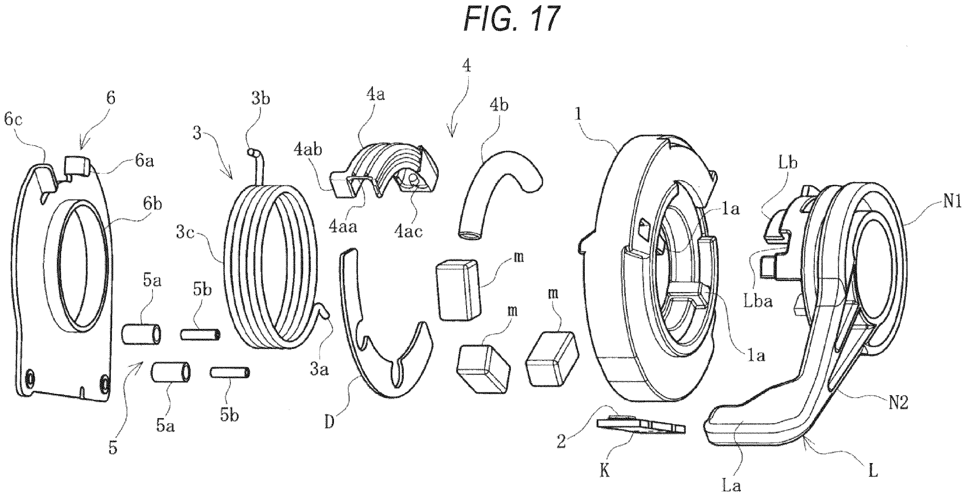

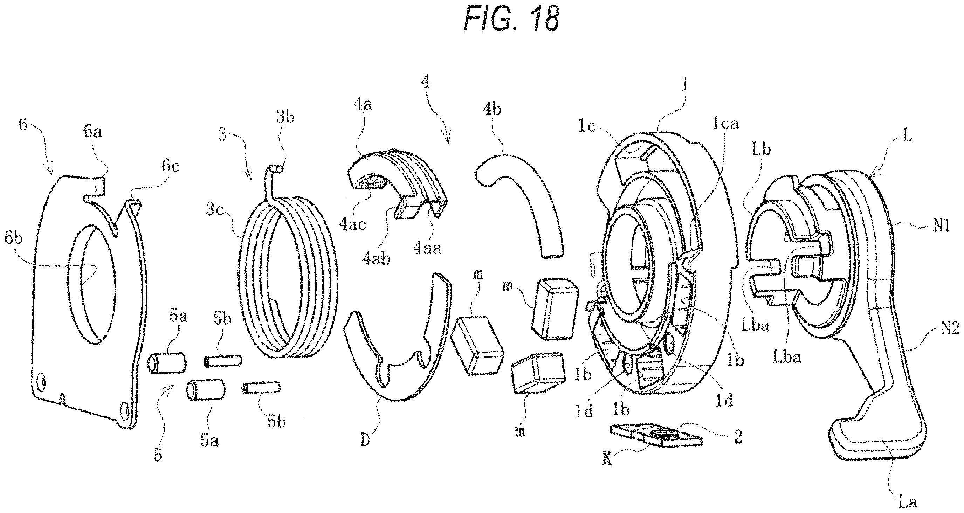

As shown in FIGs. 14 and 15, the operation lever L is attached to the right side (between the holding grip M and the case C) of the case C rotatably accommodating the interlocking member 1. As shown in FIGs. 17 and 18, the operation lever L includes a cylindrical rotation portion N1 and an extension portion N2 extending from the rotation portion N1. The rotation portion N1 is a portion to be attached to the interlocking member 1, and is formed with a protruding portion Lb protruded to form in an annular shape. A fitting portion Lba that can be fitted to the fitted portion 1a of the interlocking member 1 is formed in a part of the protruding portion Lb.

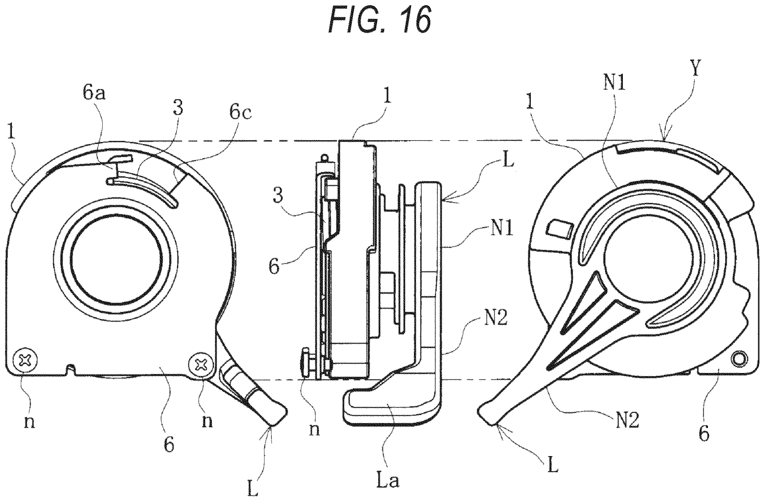

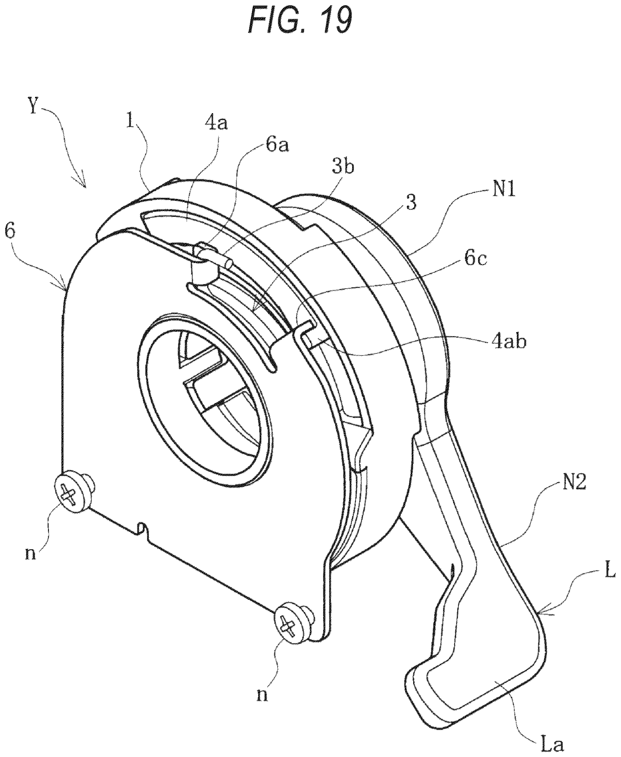

The extension portion N2 is formed of an arm-shaped portion that protrudes from the rotation portion N1 toward the driver, and an operation portion La is formed at a tip end thereof. The operation portion La according to the present embodiment is formed to be bent to the left side (the case C side) with respect to an extending direction of the extension portion N2, and as shown in FIG. 21, the driver can operate the holding grip M while holding with the thumb of a holding hand. By fitting and assembling the fitting portion Lba of the rotation portion N1 to the fitted portion 1a of the interlocking member 1, and holding the interlocking member 1, the first biasing unit 3, and the like with respect to the fixing member 6, the unit Y that can be handled as an integrated component is constructed as shown in FIGs. 16 and 19.

In the present embodiment, the operation portion La can be pushed down to swing in the forward direction α, and the operation portion La can be pushed up to swing in the reverse direction β. Accordingly, the throttle operation device according to the present embodiment can control the engine according to the rotation angle of the operation lever L by the driver performing a rotation operation on the operation lever L in the forward direction α from the initial position, allowing the vehicle to travel at any speed, and can activate or deactivate an electric component (for example, a cancel function of cruise control) mounted on the vehicle by a swing operation on the operation lever L in the reverse direction β from the initial position.

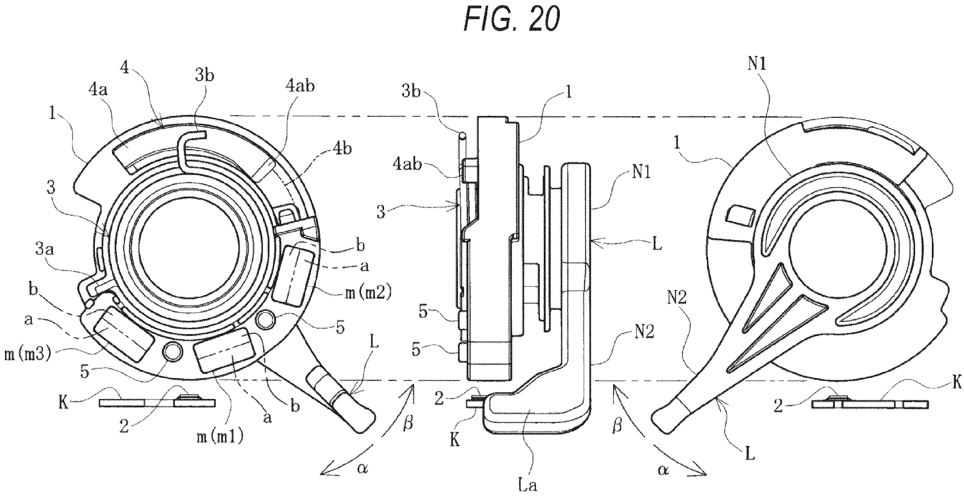

Here, in the throttle operation device according to the present embodiment, as shown in FIG. 20, the substrate K and the magnetic sensor 2 are arranged in the vicinity of the magnets (m1 to m3) arranged in an arc shape. That is, as shown in FIG. 20, the magnetic sensor 2 and the substrate K are attached to a position close to the magnet m1 at the central position among the three magnets (m1 to m3) and at a side position of the interlocking member 1. When the operation lever L is subjected to the rotation operation in the forward direction α and the interlocking member 1 rotates in the forward direction α, the magnetic sensor 2 approaches the magnet m2 on the right side in the figure. When the operation lever L is subjected to the rotation operation in the reverse direction β and the interlocking member 1 rotates in the reverse direction β, the magnetic sensor 2 approaches the magnet m3 on the left side in the figure.

According to the present embodiment, similarly to the first embodiment, the plurality of magnets m are formed side by side in an arc shape, and the plurality of magnets m, the resistance-force applying units 5, and the second biasing unit 4 are formed on the same circumference, so that the configuration of the interlocking member 1 can be simplified. In the present embodiment, a general-purpose magnet m (block-shaped magnet) may be used to reduce the manufacturing cost, and the operation lever L subjected to the rotation operation in the reverse direction β can be detected over any rotation angle regardless of the size of the magnet. In addition, the operation unit is constituted by the operation lever L that can be operated by the driver with a finger while holding the holding grip M attached to the handlebar H of the vehicle, and therefore can be applied to a vehicle equipped with the operation lever L.

Further, according to the present embodiment, similarly to the first embodiment, the plurality of magnets m are attached to the interlocking member 1 at a predetermined distance separated from each other, and the resistance-force applying unit 5 is provided at the separated place between the adjacent magnets m. Therefore, the configuration can be simplified. In the present embodiment, a general-purpose magnet m (block-shaped magnet) can be used to reduce the manufacturing cost, and the dead space in the interlocking member 1 can be effectively utilized. In addition, the operation unit is constituted by the operation lever L that can be operated by the driver with a finger while holding the holding grip M attached to the handlebar H of the vehicle, and therefore can be applied to a vehicle equipped with the operation lever L.

Further, as shown in FIGs. 14 and 15, the upper case Cb of the case C according to the present embodiment is integrally formed with a cover portion Cba formed to protrude toward the operation lever L. The cover portion Cba extends to a position where an upper part of the operation lever L is covered, and is formed to protrude such that a tip end thereof is directed to a protruding end portion of the flange Ma of the holding grip M. Accordingly, the cover portion Cba can protect the rotation portion N1 of the operation lever L (particularly, a connection portion with the interlocking member 1), and the rotation operation can be reliably and smoothly performed.

Next, a throttle operation device according to a third embodiment of the present invention will be described.

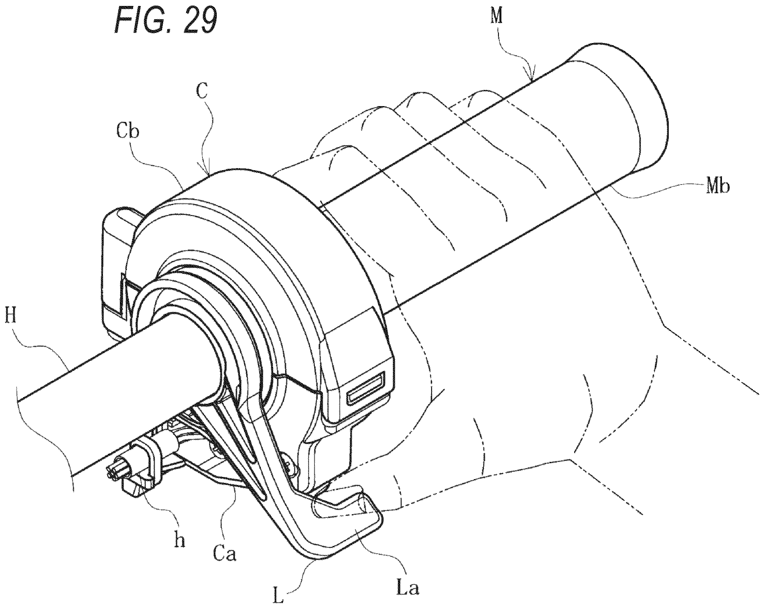

As shown in FIG. 29, the throttle operation device according to the third embodiment detects a rotation angle of an operation lever L (operation unit) that can be operated with a finger (thumb) while holding a holding grip M attached to the handlebar H of the two-wheel vehicle, and transmits a detection signal to an electronic control device such as an ECU mounted on the two-wheel vehicle.

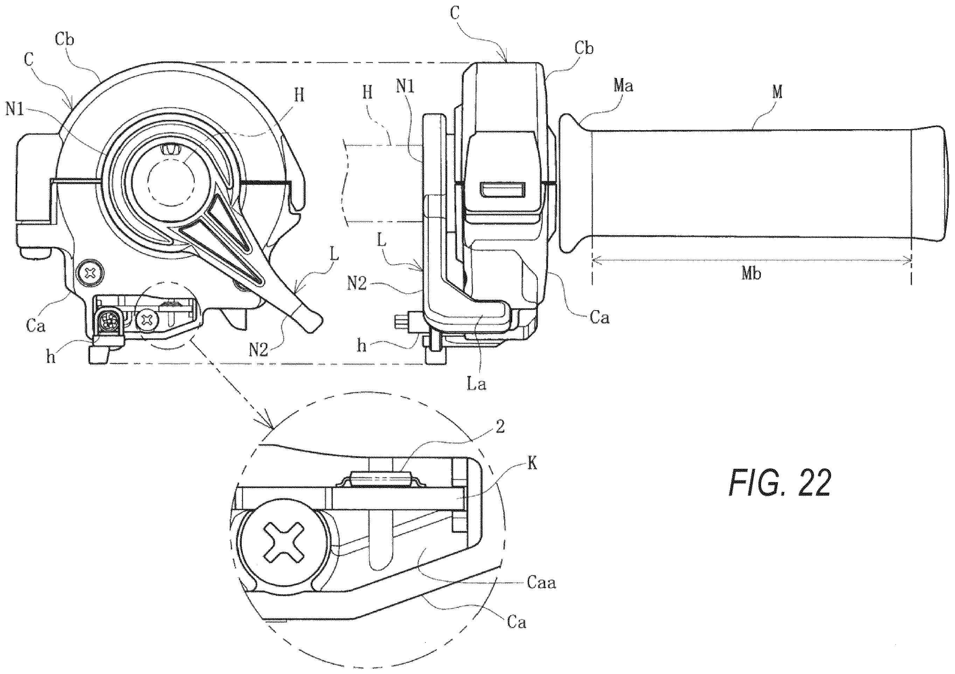

Specifically, as shown in FIGs. 22 to 28, the throttle operation device according to the present embodiment includes the interlocking member 1, the magnetic sensor 2 (rotation angle detection unit), the first biasing unit 3, the second biasing unit 4, the resistance-force applying unit 5, the fixing member 6, the case C, the operation lever L, and the holding grip M. The same components as those in the first embodiment and the second embodiment are denoted by the same reference numerals, and detailed description thereof is omitted.

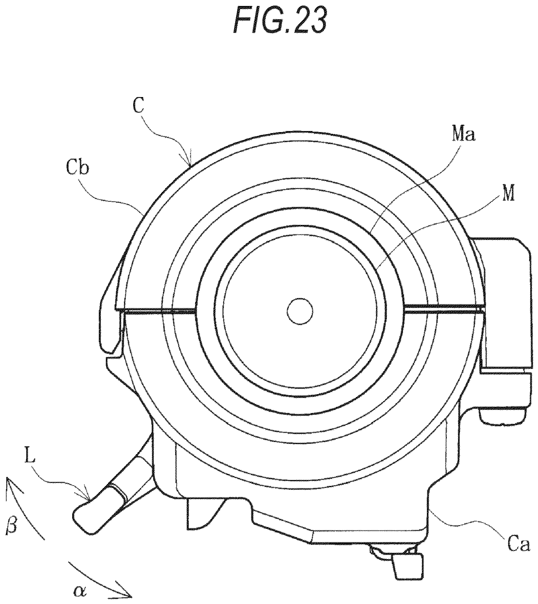

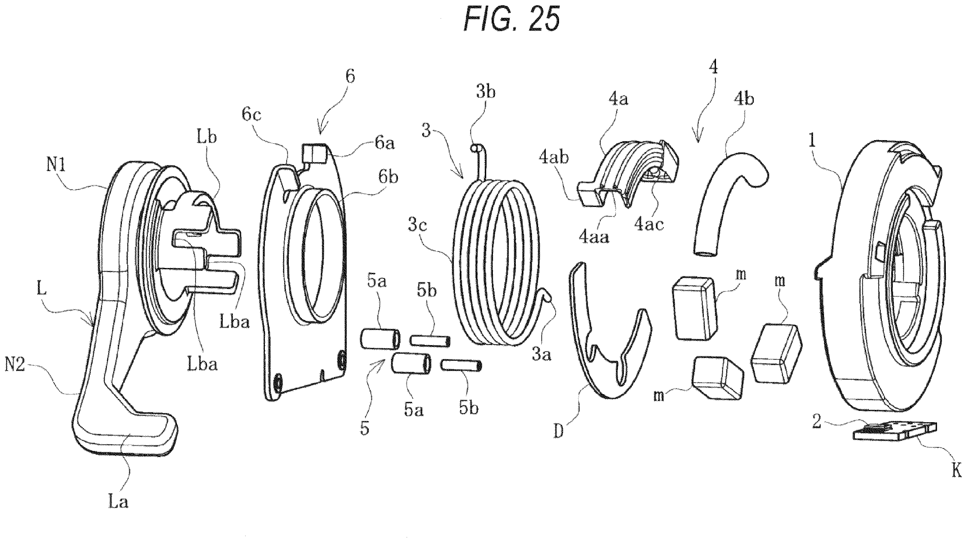

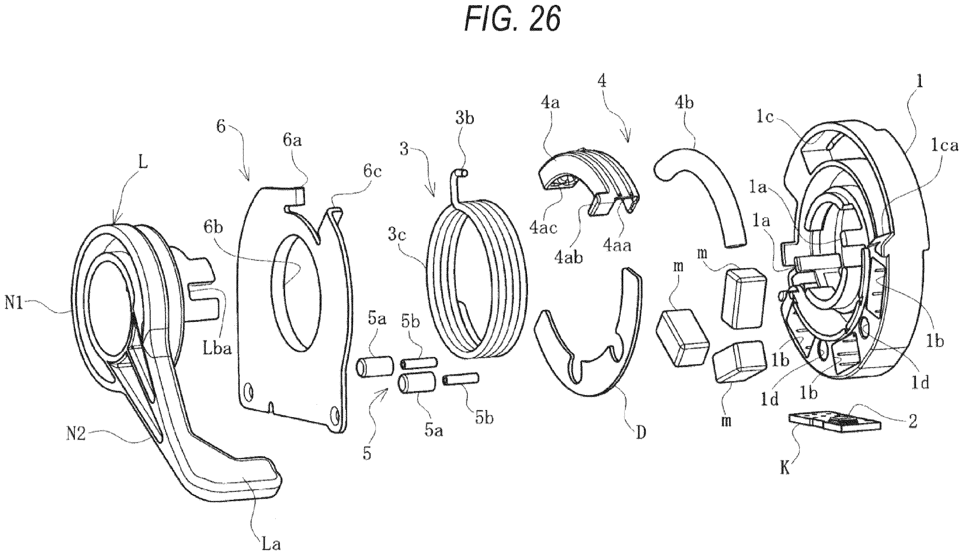

As shown in FIGs. 22 and 23, the operation lever L is attached to the left side (the side opposite to an attachment position of the holding grip M) of the case C rotatably accommodating the interlocking member 1. As shown in FIGs. 25 and 26, the operation lever L includes the cylindrical rotation portion N1 and the extension portion N2 extending from the rotation portion N1. The rotation portion N1 is a portion to be attached to the interlocking member 1, and is formed with a protruding portion Lb protruded to form in an annular shape. A fitting portion Lba that can be fitted to the fitted portion 1a of the interlocking member 1 is formed in a part of the protruding portion Lb.

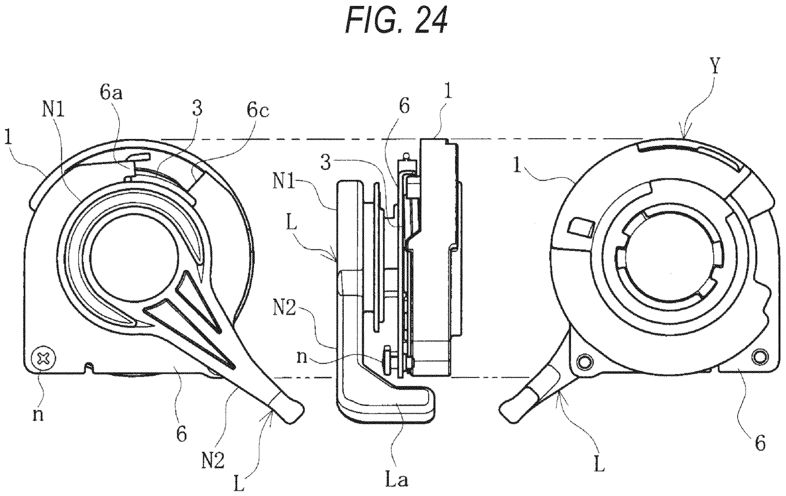

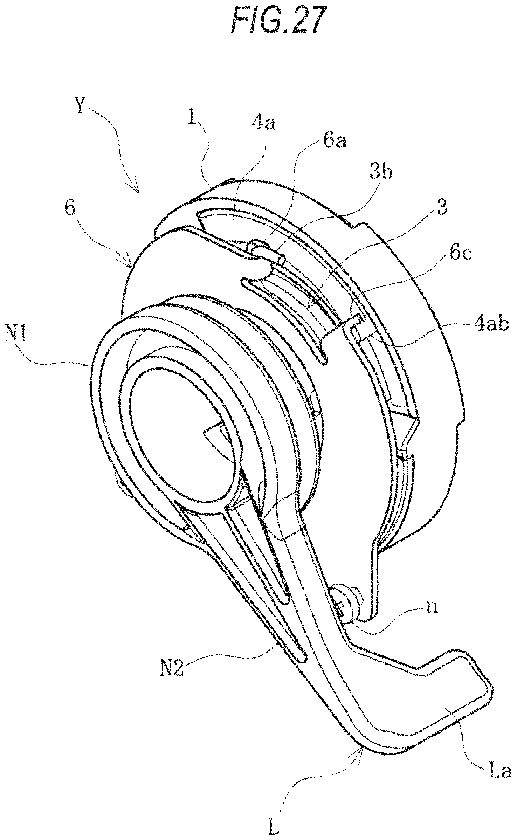

The extension portion N2 is formed of an arm-shaped portion that protrudes from the rotation portion N1 toward the driver, and an operation portion La is formed at a tip end thereof. The operation portion La according to the present embodiment is formed to be bent to the right side (the case C side) with respect to the extending direction of the extension portion N2, and as shown in FIG. 29, the driver can operate the holding grip M while holding with the thumb of a holding hand. By fitting and assembling the fitting portion Lba of the rotation portion N1 to the fitted portion 1a of the interlocking member 1, and holding the interlocking member 1, the first biasing unit 3, and the like with respect to the fixing member 6, the unit Y that can be handled as an integrated component is constructed as shown in FIGs. 24 and 27.

In the present embodiment, as in the second embodiment, the operation portion La can be pushed down to swing in the forward direction α, and the operation portion La can be pushed up to swing in the reverse direction β. Accordingly, the throttle operation device according to the present embodiment can control the engine according to the rotation angle of the operation lever L by the driver performing a rotation operation on the operation lever L in the forward direction α from the initial position, allowing the vehicle to travel at any speed, and can activate or deactivate an electric component (for example, a cancel function of cruise control) mounted on the vehicle by a swing operation on the operation lever L in the reverse direction β from the initial position.

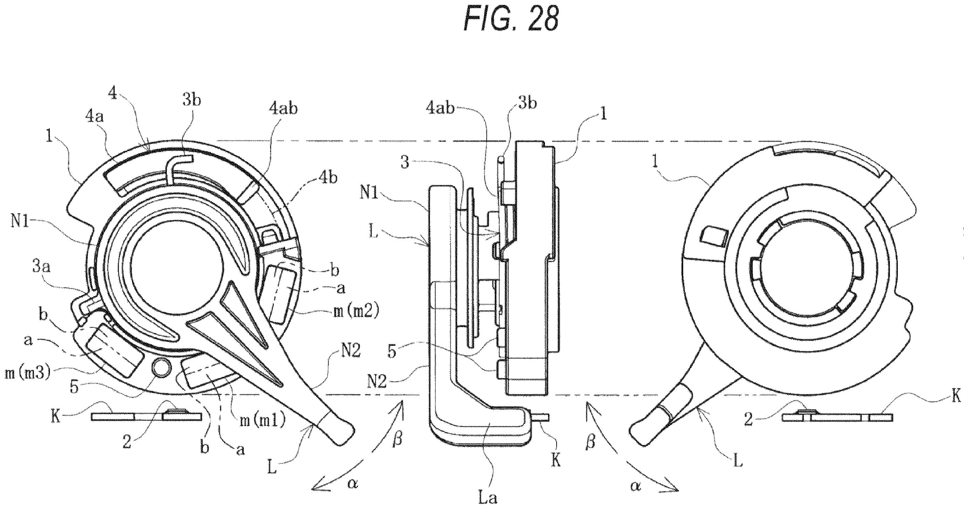

Here, in the throttle operation device according to the present embodiment, as shown in FIG. 28, the substrate K and the magnetic sensor 2 are arranged in the vicinity of the magnets (m1 to m3) arranged in an arc shape. That is, as shown in FIG. 28, the magnetic sensor 2 and the substrate K are attached to a position close to the magnet m1 at the central position among the three magnets (m1 to m3) and at a side position of the interlocking member 1. When the operation lever L is subjected to the rotation operation in the forward direction α and the interlocking member 1 rotates in the forward direction α, the magnetic sensor 2 approaches the magnet m2 on the right side in the figure. When the operation lever L is subjected to the rotation operation in the reverse direction β and the interlocking member 1 rotates in the reverse direction β, the magnetic sensor 2 approaches the magnet m3 on the left side in the figure.

According to the present embodiment, similarly to the first embodiment, the plurality of magnets m are formed side by side in an arc shape, and the plurality of magnets m, the resistance-force applying units 5, and the second biasing unit 4 are formed on the same circumference, so that the configuration of the interlocking member 1 can be simplified. In the present embodiment, a general-purpose magnet m (block-shaped magnet) may be used to reduce the manufacturing cost, and the operation lever L subjected to the rotation operation in the reverse direction β can be detected over any rotation angle regardless of the size of the magnet. In addition, the operation unit is constituted by the operation lever L that can be operated by the driver with a finger while holding the holding grip M attached to the handlebar H of the vehicle, and therefore can be applied to a vehicle equipped with the operation lever L.

Further, according to the present embodiment, similarly to the first embodiment, the plurality of magnets m are attached to the interlocking member 1 at a predetermined distance separated from each other, and the resistance-force applying unit 5 is provided at the separated place between the adjacent magnets m. Therefore, the configuration can be simplified. In the present embodiment, a general-purpose magnet m (block-shaped magnet) can be used to reduce the manufacturing cost, and the dead space in the interlocking member 1 can be effectively utilized. In addition, the operation unit is constituted by the operation lever L that can be operated by the driver with a finger while holding the holding grip M attached to the handlebar H of the vehicle, and therefore can be applied to a vehicle equipped with the operation lever L.

Although the present embodiment has been described above, the present invention is not limited thereto, and may be of other forms. For example, the interlocking member 1 may be integrated with the throttle grip G which is the operation unit or the operation lever L, or may not be fixed by the fixing member 6, and the first biasing unit 3 and the second biasing unit 4 may be capable of applying biasing force. Although three magnets m are formed in the interlocking member 1 according to the present embodiment, two or four or more magnets m may be formed. One or three or more resistance-force applying units 5 may be formed in the interlocking member 1. Note that a vehicle to which the present invention is applied is not limited to a two-wheel vehicle as in the present embodiment, and the present invention may be applied to other vehicles (for example, an ATV, a snowmobile, and the like) having the handlebar H. Further, the vehicle to which the present embodiment is applied is not limited to a vehicle in which the driving source is an engine, and may be, for example, a vehicle using an electric motor as the driving source.

As long as the throttle operation device is in accordance with the spirit of the present invention, it can be applied to devices having a different external shape or having other functions added.

## Claims

1. A throttle operation device comprising:
an interlocking member configured to rotate in conjunction with a rotation operation of an operation unit of a vehicle;
a magnet attached to the interlocking member and configured to rotate together with the interlocking member;
a rotation angle detection unit configured to detect a rotation angle of the operation unit by detecting a magnetic change in the magnet rotating together with the interlocking member;
a first biasing unit configured to bias the operation unit and the interlocking member toward an initial position during a rotation operation of the operation unit in a forward direction;
a second biasing unit configured to bias the operation unit and the interlocking member toward the initial position during a rotation operation of the operation unit in a reverse direction; and
a resistance-force applying unit configured to generate friction during rotation of the interlocking member to apply a resistance force during the rotation operation of the operation unit,
wherein a driving source of the vehicle is controlled according to the rotation angle of the operation unit detected by the rotation angle detection unit, and
the interlocking member is provided with a plurality of the magnets arranged in an arc shape, and the plurality of magnets, the resistance-force applying unit, and the second biasing unit are provided on a same circumference.

2. The throttle operation device according to claim 1,
wherein the interlocking member is provided with a plurality of first accommodation recessed portions configured to respectively accommodate the magnets and a second accommodation recessed portion configured to accommodate the resistance-force applying unit, the first accommodation recessed portions and the second accommodation recessed portion being arranged in an arc shape on one surface of the interlocking member.

3. The throttle operation device according to claim 1, further comprising:
a case in which the interlocking member is accommodated to be rotated, and having an accommodation portion in which the rotation angle detection unit is disposed; and
a fixing member fixed to the case while being attached to the interlocking member,
wherein the resistance-force applying unit has a friction material pressed against a surface of the fixing member, and the second biasing unit has a coil spring configured to generate a biasing force by being pressed and compressed by a predetermined portion of the fixing member when the interlocking member rotates as the operation unit rotates in the reverse direction.

4. The throttle operation device according to claim 3,
wherein the first biasing unit includes a torsion coil spring, and has one end locked to the interlocking member and an other end locked to the fixing member.

5. The throttle operation device according to claim 1,
wherein the magnet or the resistance-force applying unit is disposed on one side of the interlocking member bisected by a plane perpendicular to a line orthogonal to a rotation shaft of the interlocking member, and the second biasing unit is disposed on an other side of the interlocking member bisected by the plane perpendicular to the line orthogonal to the rotation shaft of the interlocking member.

6. The throttle operation device according to claim 1,
wherein the operation unit includes a throttle grip configured to be rotated while being held by a driver of the vehicle.

7. The throttle operation device according to claim 1,
wherein the operation unit includes an operation lever configured to be operated by a driver of the vehicle with the driver's finger while holding a holding grip attached to a handlebar of a vehicle.

8. A throttle operation device comprising:
an interlocking member configured to rotate in conjunction with a rotation operation of an operation unit of a vehicle;
a magnet attached to the interlocking member and configured to rotate together with the interlocking member;
a rotation angle detection unit configured to detect a rotation angle of the operation unit by detecting a magnetic change in the magnet rotating together with the interlocking member; and
a resistance-force applying unit configured to generate friction during rotation of the interlocking member to apply a resistance force during the rotation operation of the operation unit,
wherein a driving source of the vehicle is controlled according to the rotation angle of the operation unit detected by the rotation angle detection unit, and
a plurality of the magnets are attached to the interlocking member at a predetermined distance separated from each other, and the resistance-force applying unit is provided at a separated place between the magnets being adjacent to each other

9. The throttle operation device according to claim 8,
wherein the magnet and the resistance-force applying unit are provided on a same circumference in the interlocking member

10. The throttle operation device according to claim 8,
wherein the interlocking member is provided with a plurality of first accommodation recessed portions configured to accommodate the magnets and a second accommodation recessed portion configured to accommodate the resistance-force applying unit, the first accommodation recessed portions and the second accommodation recessed portion being arranged in an arc shape on one surface of the interlocking member.

11. The throttle operation device according to claim 8, further comprising:
a case, in which the interlocking member is accommodated to be rotated, having an accommodation portion in which the rotation angle detection unit is disposed; and
a fixing member fixed to the case while being attached to the interlocking member,
wherein the resistance-force applying unit has a friction material pressed against a surface of the fixing member.

12. The throttle operation device according to claim 11, further comprising:
a torsion coil spring configured to bias the operation unit and the interlocking member toward an initial position during the rotation operation of the operation unit,
wherein one end of the torsion coil spring is locked to the interlocking member, and an other end of the torsion coil spring is locked to the fixing member

13. The throttle operation device according to claim 8,
wherein the operation unit includes a throttle grip configured to be rotated while being held by a driver of the vehicle.

14. The throttle operation device according to claim 8,
wherein the operation unit includes an operation lever configured to be operated by a driver the vehicle with the driver's finger while holding a holding grip attached to a handlebar of a vehicle.
